# EUROPEAN PATENT APPLICATION

(11) **EP 4 610 018 A1**
(43) Date of publication of application: **03.09.2025**
(21) Application number: 25160339.5
(22) Date of filing: 26.02.2025
(51) Int. Cl.: B29C 45/60, B29C 48/45, B29C 48/56, B29C 49/02, B29C 49/06

(54) **SCREW HEAD, INJECTION DEVICE, AND INJECTION STRETCH BLOW MOLDING MACHINE USING THE SAME**

(30) Priority: 01.03.2024 JP 2024031493
(71) Applicant: AOKI TECHNICAL LABORATORY, INC., Hanishina-gun, Nagano 389-0603 (JP)
(72) Inventor: NAKAZAWA, Nobuhiko, Nagano 3890603 (JP)
(74) Representative: DREISS Patentanwälte PartG mbB

(57) **Abstract**

Provided are a screw head capable of enhancing agitating performance in the vicinity of an injection position, an injection device, and an injection stretch blow molding machine using the same. The screw head includes a head having a substantially conical shape, a neck portion integrally formed in one axial direction of the head, and a connecting portion integrally formed in one axial direction of the neck portion. In the screw head, the head has a plurality of agitating blades that protrude outward from an axial center of the head in a radial direction and are formed at intervals in a circumferential direction, the agitating blades each have side wall surfaces that extend in the radial direction and a surface that coincides with the circumferential direction, and an acute angle is formed at an intersection of the side wall surface and the surface.

## Description

### Cross-reference to Related Applications

This application claims the priority benefit under 35 U.S.C. § 119 of Japanese Patent Application No. 2024-031493 filed on March 6, 2024, which is hereby incorporated in its entirety by reference.

### Background of the Invention

### Field of the Invention

The present invention relates to a screw head used in an injection device, an injection device, and an injection stretch blow molding machine using the same.

### Description of Related Art

As an apparatus for manufacturing a synthetic-resin hollow article such as PET bottles, an injection stretch blow molding machine configured to shape a preform into a hollow article by a hot parison method has conventionally existed. Such an injection stretch blow molding machine includes an injection molding section, a blow molding section, and an ejection section, which are arranged at equal angular intervals on the circumference of a circle on a plane. The injection molding section is configured to mold a preform by an injection molding mold. The blow molding section is configured to shape the preform into a hollow article by stretching and blowing (blowing compressed air). The ejection section is configured to eject the formed hollow article to the outside of the molding machine. In such an injection stretch blow molding machine, an in-line screw type injection device is used as an injection device for molding a preform in the injection molding section.

Incidentally, in recent injection stretch blow molding machines, there has been an attempt to increase the production efficiency of a hollow article by releasing the preform at an early stage in the injection molding section to reduce the time required for an injection molding process, a blow molding process, and an ejection process.

For example, Patent Literature 1 discloses an invention in which, in an in-line screw type injection device, the screw 2 is rotated over a primary injection process and a pressure-holding process to shorten a molding cycle and increase an injection amount as much as possible.

In addition, Patent Literature 2 discloses an invention in which, in order to shorten the molding cycle, the screw is rotated at the same time as the start of injection, the plasticizing and kneading for producing a molten resin for the next shot proceeds from the time of the start of injection, and the plasticized and kneaded molten resin to be injected in the next injection cycle during the filling is not fed to the space in front of the screw.

As a result, the invention disclosed in Patent Literature 2 ensures that the solid resin material (resin chip) is melted and then fed to the space in front of the screw, and prevents the molten resin in a poorly melted state from being mixed into the molten resin during filling.

In the in-line screw type injection device, a screw head is attached to a front end of a screw. As a conventional technology related to a screw head, a technology disclosed in Patent Literature 3 is mentioned.

Patent Literature 3 discloses an invention in which, in order to eliminate the thermal unevenness of the molten resin, a screw head, which is a cylindrical member, has an agitating portion (3B) at the front end portion of the screw head (3), where the agitating portion (3B) is formed by engraving a plurality of agitating grooves (3d) that extend on the outer circumferential surface of the cylindrical member along the axis line thereof so as to divide the outer circumferential surface of the cylindrical member.

As an advantage of the injection molding method using the in-line screw type injection device disclosed in Patent Documents 1 and 2, since the screw rotation is continued even during injection, the metering time can be shortened as compared with the conventional injection molding method.

Further, in the injection molding method using the in-line screw type injection device, the time required for the molding cycle and the metering time are the same. Thus, since it is necessary to adjust the metering completion time to the next injection timing, the rotation speed of the screw becomes slower than a conventional molding method, so that the rotation time becomes longer. As a result, the efficiency of plasticizing and kneading the molten resin can be enhanced, so that the temperature of the molten resin to be injected can be lowered more than that in the conventional injection molding method.

Focusing on the screw, the screw disclosed in Patent Literature 3 is configured in the following manner in order to eliminate the thermal unevenness of the molten resin. On the screw head (3), the agitating portion (3B) is at the front end portion, where the agitating portion (3B) is formed by engraving a plurality of agitating grooves (3d) that extend on the outer circumferential surface of the cylindrical member along the axis line thereof so as to divide the outer circumferential surface of the cylindrical member.

However, the screw disclosed in Patent Literature 3 has only the plurality of agitating grooves 3d formed by engraving. While this configuration may enhance the efficiency of kneading, there is still room for improvement.

An object of the present invention is to provide a screw head capable of enhancing agitating performance near an injection position, an injection device, and an injection stretch blow molding machine using the same.

### Brief Summary of the Invention

The present invention relates to a screw head that includes a head having a substantially conical shape, a neck portion integrally formed in one axial direction of the head, and a connecting portion integrally formed in one axial direction of the neck portion. In the screw head, the head has a plurality of agitating blades that protrude outward from an axis center of the head in a radial direction and are formed at intervals in a circumferential direction, the agitating blades each have side wall surfaces that extend in the radial direction and a surface that coincides with the circumferential direction, and an acute angle is formed at an intersection of the side wall surface and the surface.

Furthermore, the present invention is characterized in that a concave groove along the circumferential direction is formed in the surface.

The present invention also provides an injection device for injecting a molten resin, including the above-described screw head.

The present invention also provides an injection stretch blow molding machine including at least an injection molding section configured to mold a preform, a blow molding section configured to shape the preform into a hollow article by stretching and blowing the molded preform, and an ejection section configured to eject the hollow article, which has been shaped by the blow molding section, to the outside of the molding machine. In this injection stretch blow molding machine, the injection molding section includes an injection molding mold, and an injection device configured to inject a molten resin into the injection molding mold. The injection device includes a screw head that includes a head having a substantially conical shape, a neck portion integrally formed in one axial direction of the head, and a connecting portion integrally formed in one axial direction of the neck portion. The head has a plurality of agitating blades that protrude outward from an axial center of the head in a radial direction and are formed at intervals in a circumferential direction, the agitating blades each have side wall surfaces that extend in the radial direction and a surface that coincides with the circumferential direction, and an acute angle is formed at an intersection of the side wall surface and the surface.

According to the present invention, the screw head includes a head having a substantially conical shape, a neck portion integrally formed in one axial direction of the head, and a connecting portion integrally formed in one axial direction of the neck portion. In the screw head, the head has a plurality of agitating blades that protrude outward from an axial center of the head in a radial direction and are formed at intervals in a circumferential direction, the agitating blades each have side wall surfaces that extend in the radial direction and a surface that coincides with the circumferential direction, and an acute angle is formed at an intersection of the side wall surface and the surface.

By adopting such a configuration, torque can be applied to the molten resin present between the adjacent agitating blades, enabling the generation of a strong swirling flow in the molten resin near the injection position. As a result, the agitating performance near the injection position can be enhanced.

Furthermore, according to the present invention, a concave groove along the circumferential direction may be formed in the surface. Consequently, a strong and complicated swirling flow can be generated in the molten resin near the injection position. As a result, the agitating performance near the injection position can be enhanced.

Furthermore, according to the present invention, the injection device includes the above-described screw head, and thus, it is possible to realize an injection device with enhanced agitating performance near the injection position.

Furthermore, according to the present invention, the injection stretch blow molding machine includes the injection device that includes the above-described screw head. Consequently, it is possible to realize an injection stretch blow molding machine with enhanced agitating performance near the injection position.

### Brief Description of the Drawings

These and other characteristics, features, and advantages of the present invention will become clear from the following description with reference to the accompanying drawings, wherein:
[Fig. 1] Fig. 1 is an explanatory view schematically illustrating an injection stretch blow molding machine in a plan view;
[Fig. 2] Fig. 2 is an explanatory view schematically illustrating an injection device;
[Fig. 3] Fig. 3 is a partial view illustrating the vicinity of the front end of a screw;
[Fig. 4] Fig. 4 is a view illustrating a state in which the screw is viewed from its front end;
[Fig. 5] Fig. 5 is a cross-sectional view taken along a line A-A in Fig. 4;
[Fig. 6] Fig. 6 is a cross-sectional view taken along a line B-B in Fig. 4;
[Fig. 7] Fig. 7 is an explanatory view illustrating the vicinity of a screw head 14 in a filling state;
[Fig. 8] Fig. 8 is an explanatory view illustrating a screw head 14A according to a second embodiment of the present invention;
[Fig. 9] Fig. 9 is an explanatory view illustrating a cross section of the screw head 14A;
[Fig. 10] Fig. 10 is an explanatory view illustrating the vicinity of the screw head 14A in a filling state;
[Fig. 11] Fig. 11 is an explanatory view illustrating a screw head 14B according to a third embodiment of the present invention;
[Fig. 12] Fig. 12 is a view illustrating the screw head 14B as viewed from its front end side; and
[Fig. 13] Fig. 13 is an explanatory view illustrating a cross section of the screw head 14B.

### Detailed Description of the Invention

Injection stretch blow molding machine:

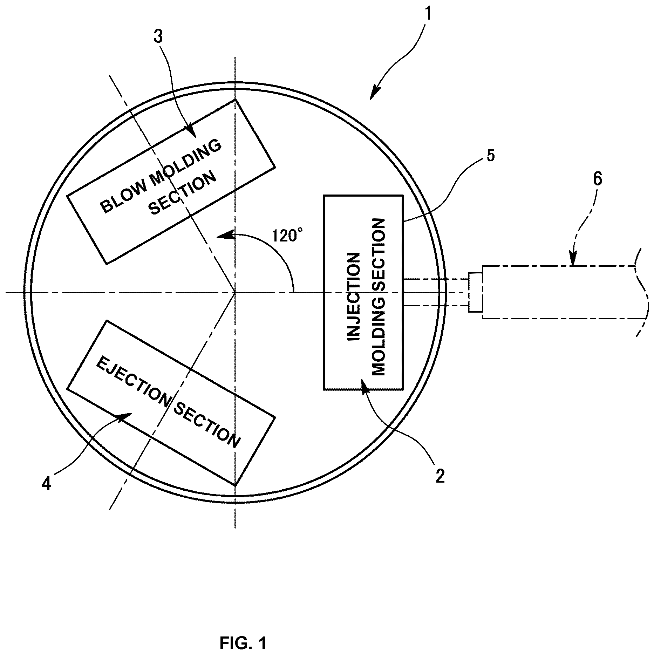

Fig. 1 is an explanatory view schematically illustrating an example of an injection stretch blow molding machine according to an embodiment of the present invention in a plan view. In the injection stretch blow molding machine 1, an injection molding section 2, a blow molding section 3, and an ejection section 4 are arranged in order at equal angular intervals of 120 degrees on the circumference of a circle in a plane.

The injection molding section 2 injects a molten resin into an injection molding mold to mold a preform at a high temperature. In particular, the injection stretch blow molding machine 1 of the present embodiment is configured so that the preform can be released at an early stage in a state in which stretch blowing can be performed at the blow molding section 3.

The molded preform is released while being held by a lip mold, which is incorporated as part of an injection molding mold. The released preform is transferred to the blow molding section 3 and placed in a blow molding mold. The blow molding section 3 stretches the preform held by the lip mold and blows the preform with high pressure air or the like to mold a hollow article.

The blow molded hollow article is transferred to the ejection section 4 while being held by the lip mold. The ejection section 4 is configured to eject the hollow article, which has been shaped by the blow molding section 3, to the outside of the molding machine. The injection stretch blow molding machine 1 moves the lip mold from the blow molding section 3 to the ejection section 4, opens the lip mold to release the constraint on the hollow article, and removes the hollow article from the lip mold.

The hollow article that has been removed from the lip mold is ejected to the outside of the molding machine as described above. Then, the lip mold that has released the hollow article moves to the injection molding section 2 again, and is incorporated into the injection molding mold for preform as a part thereof.

In the injection stretch blow molding machine 1, as described above, the preform molded by the injection molding section 2 is transferred to the blow molding section 3 while being held by the lip mold, the hollow article that has been blow molded by the blow molding section 3 is transferred to the ejection section 4 while being held by the lip mold, and then the lip mold releases the hollow article at the ejection section 4.

### Molding cycle:

The injection stretch blow molding machine 1 sequentially performs an injection molding process of injection molding a preform described above, a blow molding process of blow molding the preform, which has been molded in the injection molding process, into a hollow article, and an ejection process of ejecting the hollow article, which has been molded in the blow molding process, to the outside of the molding machine at the ejection section.

The injection stretch blow molding machine 1 has three lip molds provided at respective three positions, and is configured such that the lip molds are capable of responding to the processes simultaneously at three respective positions, at the injection molding section 2, at the blow molding section 3, and at the ejection section 4.

The three lip molds are assembled onto a rotary plate at the three positions, respectively. With this configuration, the rotary plate is caused to rotate 120 degrees in one direction and then stops. The lip molds descend when the rotary plate stops and then ascend after injection and cooling are completed. The same operation is then repeated after the rotary plate rotates another 120 degrees in one direction. As a result, each lip mold moves through the positions as the process progresses.

In the injection stretch blow molding machine 1, the three lip molds move simultaneously, shifting corresponding positions. As a result, the molding cycle and the next molding cycle of the hollow articles are shifted by one step.

### Injection device:

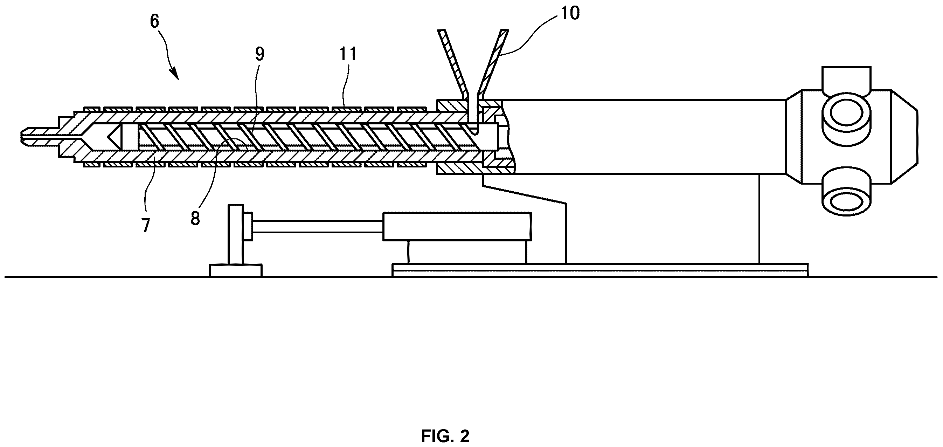

FIG. 2 is an explanatory view schematically illustrating the injection device 6. The injection device 6 is an in-line screw type injection device including: a barrel (heating cylinder) 7 having a cylinder 8 formed therein; and a screw 9 that is rotatably disposed inside the cylinder 8 so as to be movable forward and backward. The injection device 6 further includes a heater 11 configured to promote plasticization of the resin material. The heater 11 is disposed on the outer periphery of the barrel 7.

The screw 9 has a supply portion, a compression portion, and a metering portion The injection device 6 also includes a feed hopper 10 that supplies a chip-shaped resin material to the supply portion of the screw 9. The screw 9 is caused to move to transfer the supplied resin material from the compression portion to the metering portion of the screw 9.

Shear heat is generated by the movement of the resin material from the compression portion to the metering portion. In addition to this, the resin material is further heated by the heater 11 and plasticized and kneaded by agitation due to the screw rotation. As a result, a molten resin is produced.

The generated molten resin is fed to the front of the screw 9 to be accumulated in front of the screw 9. This accumulated resin is to be injected into the injection molding mold 5.

In the injection molding process, the injection device 6 performs three operations including: filling in which the molten resin is fed into the injection molding mold 5, pressure-holding in which pressure is applied to the molten resin injected into the injection molding mold 5 and held to suppress backflow of the molten resin, and metering in which another portion of the molten resin is fed in front of the screw 9 in order to inject a predetermined required amount of the molten resin into the injection molding mold 5 next.

The injection device 6 repeats the filling, pressure-holding, and metering in series, and one set of these processes is considered an injection cycle. One cycle of the injection cycle includes injection (filling + pressure-holding) and metering.

### Injection molding process - Injection:

When the injection device 6 starts filling in the injection molding process, the screw 9 is located in the injection start position. The injection device 6 rotates the screw 9 that is located in the injection start position and simultaneously causes the screw 9 to advance. As a result, the required amount of the molten resin is injected into the injection molding mold 5 by advancement of the rotating screw 9.

The filling is performed by rotating the screw 9 by using a drive unit and applying a hydraulic pressure to the screw 9 in a forward direction (in a direction toward the injection molding mold 5). When it is determined that the screw 9 has reached a predetermined pressure-holding switching position, the injection is terminated by switching the pressure applied to the screw 9 to a back pressure for pressure-holding.

In the filling, when the hydraulic pressure for advancing the screw 9 is applied to the screw 9, the resin pressure (injection pressure) in front of the screw 9 increases, so that a ring valve (ring-shaped channel opening/closing valve located at the front end of the screw) is closed. Therefore, even in a state where the generation of the molten resin is started by the rotation of the screw 9, the molten resin does not flow from the metering portion toward the front of the screw 9. That is, the molten resin to be plasticized and kneaded to be injected in the next injection cycle is not fed to the space in front of the screw 9 during filling.

In the injection device 6, the screw 9 rotates from the start of injection (filling) as described above. The rotation of the screw 9 starts the generation of the molten resin for the next molding cycle. That is, in the injection device 6, the start of injection and the start of generation of the molten resin for the next shot are performed simultaneously.

### Injection molding process - Pressure-holding:

The injection device 6 that has finished filling performs, continuously from the filling operation, pressure-holding while rotating the screw 9.

In the injection device 6, a back pressure set for pressure-holding is applied to the screw 9 during pressure-holding. At this time, the screw 9 continuously rotates after the filling, and continues to generate the molten resin for the next shot.

### Injection molding process - Metering:

After completion of the pressure-holding, the injection device 6 continues the rotation operation of the screw 9 during pressure-holding, and causes the screw 9 to retreat while rotating it to perform metering. The metering operation is set so that the time required for the metering falls within the dry cycle time of mold-opening, rotating, and mold-closing in the injection molding section 2.

In the metering, the injection device 6 causes the screw 9 to retreat in a state where a back pressure is applied while the screw 9 is rotated. In the metering, the rotational speed of the screw 9 is conventionally about 120 RPM. However, in the present embodiment, the rotational speed is set to, for example, a lower rotational speed than the conventional one, e.g., 70 RPM to 80 RPM. In the metering, the resin material is plasticized and kneaded, and a predetermined required amount of the molten resin is fed to the front of the screw 9. When the screw 9 retreats and reaches the injection start position, the rotation is stopped, thereby stopping the retreat of the screw 9 to end the metering.

When the screw 9 reaches the injection start position (metering completion position), the injection device 6 immediately starts the injection molding process without a waiting time.

In the present embodiment, when the screw 9 has retreated to the injection start position, the rotation of the screw 9 is stopped. However, the rotation of the screw 9 may be continued if necessary.

Since the injection device 6 of the present embodiment starts performing the plasticizing and kneading for generating the molten resin for the next shot at the injection start time, the generation of the molten resin for the next shot can be started at an earlier stage than that by the conventional injection device that starts rotation of the screw after the completion of the pressure-holding. Therefore, compared with the conventional injection device, the injection device 6 of the present embodiment can generate the molten resin for the next shot and end the generation at an early stage, and thus makes it possible to shorten the molding cycle.

Furthermore, since the time for metering is the time required for the molding cycle, the screw rotation speed in the metering becomes low, and the rotation time becomes long. As a result, the efficiency of plasticizing and kneading the molten resin can be enhanced, so that the temperature of the molten resin to be injected can be lowered more than that of conventional injection molding.

The injection device 6 of the present embodiment causes the screw 9 to rotate continuously in the filling, pressure-holding, and metering, and the screw rotation speed per unit time need not be the same for the filling, pressure-holding, and metering. The screw rotation speed per unit time is variable for each of the filling, pressure-holding, and metering, and can be appropriately set for each of the filling, pressure-holding and metering.

It should be noted that the point that the screw rotation speed per unit time can be varied in the filling, the pressure-holding, and the metering, of course, includes changing the screw rotation speed per unit time during each of the filling, the pressure-holding, and the metering.

### Screw:

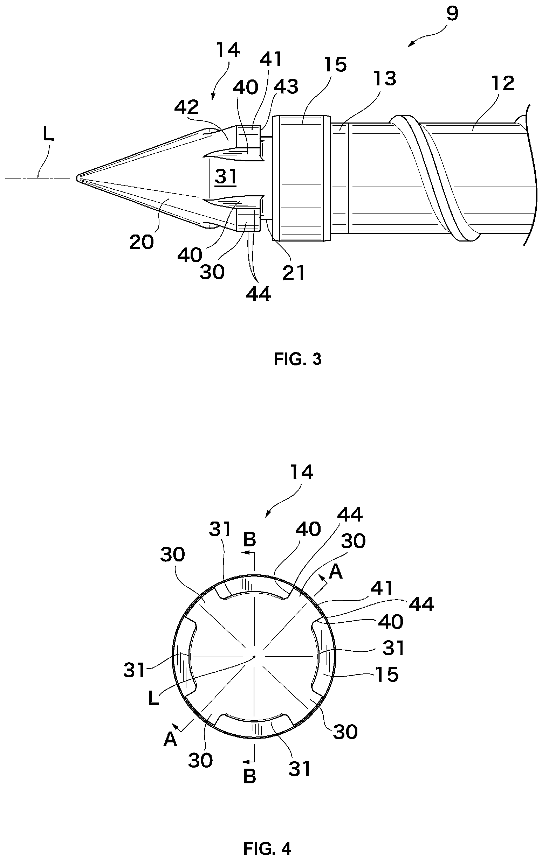

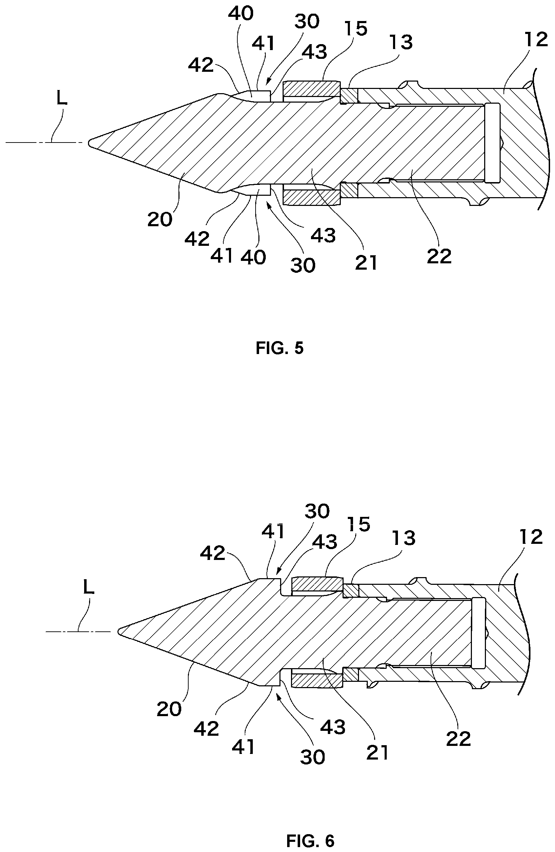

Fig. 3 is a view illustrating the vicinity of the front end of the screw 9. Fig. 4 is a view illustrating a state in which the screw 9 is viewed from its front end. Fig. 5 is a cross-sectional view taken along a line A-A in Fig. 4, and Fig. 6 is a cross-sectional view taken along a line B-B in Fig. 4.

The screw 9 is configured to include a screw main body 12 in which a spiral groove is formed in an outer surface portion of a main body formed in a cylindrical shape, a seat ring 13 provided at one end portion of the screw main body 12, a screw head 14 attached to one end portion of the screw main body 12, and a ring valve 15 provided at a neck portion 21 of the screw head 14, which will be described later.

The screw main body 12 includes the supply portion, the compression portion, and the metering portion, which are not illustrated, and transfers the molten resin supplied from the feed hopper 10 toward the screw head 14. The supply portion is a region for transferring the molten resin while heating. The compression portion is a region that promotes melting by pressurization and compression of the molten resin also preliminarily heated in the supply portion and by supply of mechanical energy. The metering portion is a region that promotes the homogenization of the molten resin that has been transferred from the compression portion and rectifies the flow of the molten resin. The metering portion generates a pressure required for the molten resin to pass through the ring valve 15. The structure of such a screw main body 12 does not differ from that of conventional full flight screws.

### Screw head:

The screw head 14 includes a head 20 having a substantially conical shape, a neck portion 21 integrally formed in one axial direction that is the direction in which an axis line L of the head 20 extends, and a connecting portion 22 integrally formed in one axial direction of the neck portion 21.

The head 20 includes a plurality (four in the present embodiment) of agitating blades 30 that protrude outward from an axial center of the head 20 in a radial direction and are formed at intervals in the circumferential direction. A concave groove 31 through which the molten resin passes is formed between adjacent agitating blades 30.

The agitating blades 30 each have two side wall surfaces 40 extending in the radial direction, a surface 41 that coincides with the circumferential direction of the head 20, an inclined surface 42 connected to one end of the surface 41 and inclined toward the front end of the screw head 14, and a back surface 43 connected to the other end of the surface 41 and extending in the radial direction.

The angle formed by the intersection 44 of the side wall surface 40 and the surface 41 is set to be an acute angle, preferably 80 degrees to 90 degrees. As illustrated in Fig. 6, the inclined surface 42 is smoothly connected to the inclined surface of the head 20.

The neck portion 21 is formed in a substantially cylindrical shape. The ring valve 15 is attached to the neck portion 21 so as to be movable in the axial direction. When the ring valve 15 is in the open position (on the front end side), the neck portion 21 allows the molten resin to move from the gap between itself and the ring valve 15 to the front of the screw head. When the ring valve 15 is in the closed position (on the rear end side), there is no gap between the neck portion 21 and the ring valve 15, and so the molten resin does not move to the front of the screw head.

The connecting portion 22 is a portion connected to the screw main body 12. The connecting portion 22 is formed in a substantially cylindrical shape, and a male screw is formed on the surface thereof. An attachment portion for attaching the screw head 14 is provided at the front end of the screw main body 12. The connecting portion 22 is connected to the screw main body 12 by being screwed to a female screw formed in the attachment portion provided in the screw main body 12.

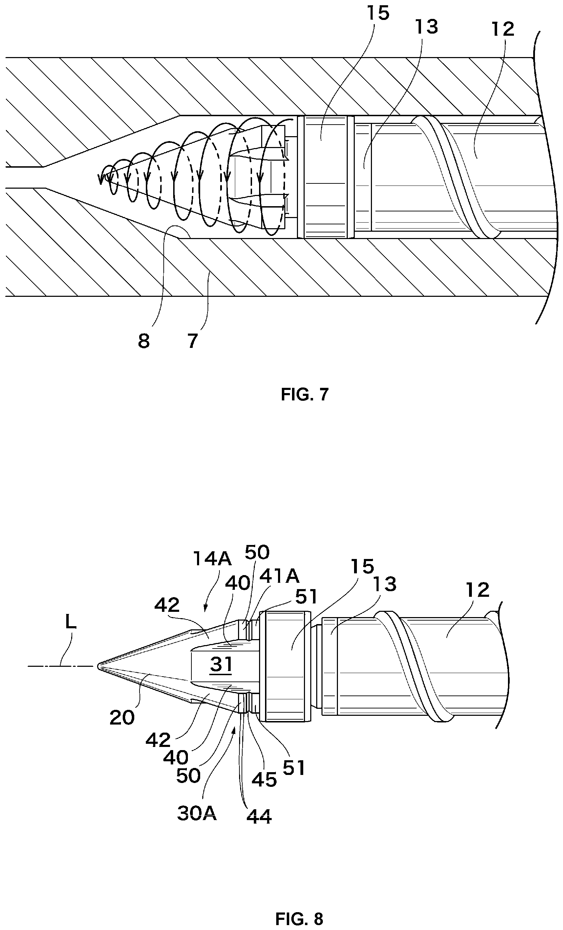

Fig. 7 is an explanatory view illustrating the vicinity of the screw head 14 in the filling state. As described above, the injection device 6 applies a hydraulic pressure to the screw 9 to cause the screw 9 to advance during filling. At this time, since the resin pressure (injection pressure) in front of the screw 9 is increased, the ring valve 15 (ring-shaped channel opening/closing valve located at the front end of the screw) is closed. Therefore, even in a state in which the generation of the molten resin is started by the rotation of the screw 9, the molten resin does not flow from the metering portion toward the front (injection port side) of the screw 9.

In this state, since the screw 9 is continuously rotating, the injected molten resin (molten resin located on the front end side of the ring valve 15) is pushed out to the injection port in a state of being accompanied by a swirling flow. That is, the molten resin being injected is extruded into the injection port while being plasticized and kneaded, and is injected into the injection molding mold 5.

As illustrated in Fig. 7, the screw head 14 has the agitating blades 30, each of which has the side wall surfaces 40 and the surface 41. Furthermore, the intersection 44 is formed with an acute angle. As a result, the molten resin existing in the concave groove 31 formed between the adjacent agitating blades 30 receives a torque from the side wall surface 40 in the rotational direction by the rotation of the screw 9. Since the screw 9 advances toward the injection port while rotating, a swirling flow can be generated in the molten resin.

By forming the intersection 44 with an acute angle, a torque can be applied to almost all of the molten resin in the grooves 31, so that a strong swirling flow can be generated. As a result, the efficiency of plasticizing and kneading the molten resin can be enhanced, so that the generation of temperature unevenness can be suppressed and the temperature of the molten resin to be injected can be made lower than that of conventional injection molding.

Use of the screw head 14 of the present embodiment as described above can enhance the efficiency of plasticizing and kneading the molten resin, generation of temperature unevenness can be suppressed and the temperature of the molten resin to be injected can be made lower than that of conventional injection molding methods. Therefore, it becomes possible to reduce the waiting time of the preform in the blow molding mold, which time was provided in order to equalize the abnormal temperature spots of the preform in the conventional blow molding process. This effect can shorten the molding cycle.

In the conventional technology, when polypropylene is used as a molding material, it has been necessary to provide a long waiting time for a preform in a blow molding mold in order to eliminate temperature unevenness. However, use of the screw head 14 of the present embodiment can provide a preform molded in a manner where the molten resin was sufficiently kneaded to suppress generation of temperature unevenness, so that it becomes possible to reduce or eliminate the waiting time of the preform in the blow molding mold.

Furthermore, for example, when the molding material includes a granular pellet in which a filler is blended, use of the screw head 14 of the present embodiment can sufficiently knead the molten resin at the time of filling, so that it becomes possible to provide a preform molded with the molten resin without uneven agitation. As a result, a desired molded article can be produced with high yield.

Therefore, the present invention can realize a screw head, an injection device, and an injection stretch blow molding machine using the same that are capable of enhancing the agitating performance near the injection position.

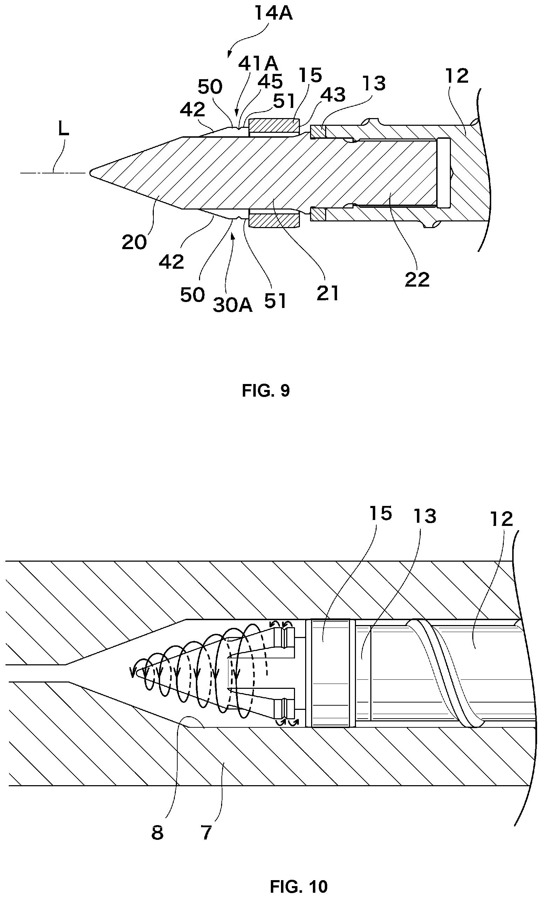

Next, another embodiment of the present invention will be described. Fig. 8 is an explanatory view illustrating a screw head 14A according to a second embodiment of the present disclosure, and Fig. 9 is an explanatory view illustrating a cross section of the screw head 14A. Fig. 10 is an explanatory view illustrating the vicinity of the screw head 14A in the filling condition. In order to avoid redundant description, the same components as those in the above-described embodiment are denoted by the same reference numerals, and descriptions thereof will be omitted.

The screw head 14A has agitation blades 30A. Each agitation blade 30A has a surface 41A. A concave groove 45 having a substantially V-shaped cross section and extending along the circumferential direction is formed in the surface 41A. The concave groove 45 is a groove recessed in the radially inward direction of the screw head 14, and the shape of the cross section thereof is not limited to a V-shape. Since the concave groove 45 is formed in the surface 41A in this manner, the agitating blade 30A has a front blade portion 50 located on the front end side of the concave groove 45, and a rear blade portion 51 located on the rear end side of the concave groove 45.

When the screw head 14A is rotated, as illustrated in Fig. 10, an annular gap having the shape of the cross section of the concave groove 45 is formed between the molten resin agitated by the front blade portion 50 and the molten resin agitated by the rear blade portion 51. At that time, the torque applied to the molten resin located in the annular gap and the torque applied to the molten resin located between the front blade portions 50 and between the rear blade portions 51 differ from each other.

Therefore, the molten resin agitated by the agitating blades 30A is applied with a torque dispersed more than that applied by the agitating blades 30, and a complicated swirling flow is generated in the molten resin. As a result, the efficiency of plasticizing and kneading the molten resin can be further enhanced.

Furthermore, since the reaction force acting on the screw head 14A is reduced by the concave groove 45, the rotational speed of the screw 9 can also be increased, and the durability can also be improved by reducing the loads.

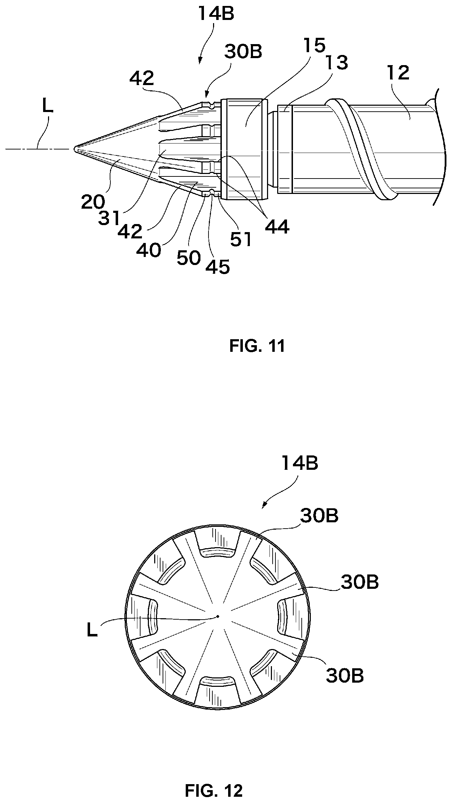

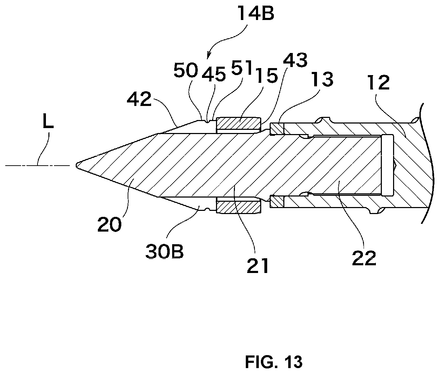

Next, a third embodiment of the present invention will be described. Fig. 11 is an explanatory view illustrating a screw head 14B according to a third embodiment of the present disclosure, Fig. 12 is a view illustrating the screw head 14B as viewed from the front end side, and Fig. 13 is an explanatory view illustrating a cross section of the screw head 14B. In order to avoid redundant description, the same components as those in the above-described embodiment are denoted by the same reference numerals, and descriptions thereof will be omitted.

The screw head 14B has agitating blades 30B. The agitating blade 30B is formed such that an interval in the circumferential direction between adjacent agitating blades 30B is narrower than that between the agitating blades 30A and the thickness dimension thereof in the circumferential direction is also smaller than that of the agitating blade 30A. In other words, the screw head 14B has the agitating blades 30B that are equivalent to eight agitating blades 30A having a small thickness dimension formed circumferentially.

The groove 31 formed in the screw head 14B is a groove having a smaller interval than the groove 31 formed in the screw head 14A.

Each of the agitating blades 30B is divided into a front blade portion 50 and a rear blade portion 51 by the presence of the concave groove 45. When the screw head 14B is rotated to rotate the agitating blades 30B, an annular gap having the shape of the cross section of the concave groove 45 is formed between the molten resin agitated by the front blade portion 50 and the molten resin agitated by the rear blade portion 51.

Furthermore, since the interval of the adjacent grooves 31 in the screw head 14B is narrower than that of the adjacent grooves 31 in the screw head 14A, the molten resin entering the grooves 31 in the screw head 14B is more dispersed as compared with the case of the grooves 31 in the screw head 14A.

At this time, the molten resin agitated by the agitating blades 30B is applied with a torque dispersed more than that with the agitating blades 30A, so that a more complicated swirling flow is generated in the molten resin. Therefore, the efficiency of plasticizing and kneading the molten resin can be enhanced.

In the above-mentioned description, as an example of the injection stretch blow molding machine, the injection stretch blow molding machine 1 in which the injection molding process, the blow molding process, and the ejection process are performed in series has been mentioned, but the present invention is not limited thereto.
The present invention can also be applied to an injection stretch blow molding machine that can perform a temperature adjustment process for adjusting the temperature of an injection molded preform.

### References Signs List

- 1: injection stretch blow molding machine
- 2: injection molding section
- 3: blow molding section
- 4: ejection section
- 9: screw
- 12: screw main body
- 13: seat ring
- 14: screw head (torpedo)
- 14A: screw head
- 14B: screw head
- 15: ring valve
- 20: head
- 21: neck portion
- 22: connecting portion
- 30: agitating blade
- 30A: agitating blade
- 30B: agitating blade
- 31: groove
- 40: side wall surface
- 41: surface
- 42: inclined surface
- 43: rear surface
- 44: intersection
- 50: front blade portion
- 51: rear blade portion

### Citation List

Patent Literature 1: Japanese Patent Application Laid-Open No. 1999-207792 (H11-207792)
Patent Literature 2: Japanese Patent Application Laid-Open No. 2021-181183
Patent Literature 3: Japanese Patent Application Laid-Open No. 1982-197135 (S57-197135)

## Claims

1. A screw head comprising:
a head having a substantially conical shape;
a neck portion integrally formed in one axial direction of the head; and
a connecting portion integrally formed in one axial direction of the neck portion, wherein:
the head has a plurality of agitating blades that protrude outward from an axial center of the head in a radial direction and are formed at intervals in a circumferential direction;
the agitating blades each have side wall surfaces that extend in the radial direction and a surface that coincides with the circumferential direction; and
an acute angle is formed at an intersection of the side wall surface and the surface.

2. The screw head according to claim 1, wherein a concave groove along the circumferential direction is formed in the surface.

3. An injection device for injecting a molten resin, comprising the screw head according to claim 1 or 2.

4. An injection stretch blow molding machine comprising at least:
an injection molding section configured to mold a preform;
a blow molding section configured to shape the preform into a hollow article by stretching and blowing the molded preform; and
an ejection section configured to eject the hollow article, which has been shaped by the blow molding section, to the outside of the molding machine, wherein:
the injection molding section includes an injection molding mold, and an injection device configured to inject a molten resin into the injection molding mold;
the injection device includes
a screw head that includes
a head having a substantially conical shape,
a neck portion integrally formed in one axial direction of the head, and
a connecting portion integrally formed in one axial direction of the neck portion;
the head has a plurality of agitating blades that protrude outward from an axial center of the head in a radial direction and are formed at intervals in a circumferential direction;
the agitating blades each have side wall surfaces that extend in the radial direction and a surface that coincides with the circumferential direction; and
an acute angle is formed at an intersection of the side wall surface and the surface.
